(19) **Europäisches Patentamt / European Patent Office / Office européen des brevets**

(11) **EP 4 503 861 A1**

(12) # EUROPEAN PATENT APPLICATION

(43) Date of publication:
**05.02.2025 Bulletin 2025/06**

(21) Application number: **23189802.4**

(22) Date of filing: **04.08.2023**

(51) International Patent Classification (IPC):
**H05B 41/24** (2006.01)     **H05B 41/288** (2006.01)
**H02M 7/48** (2007.01)

(52) Cooperative Patent Classification (CPC):
**H05B 41/2883; H02M 7/4815; H05B 41/24;**
H02M 1/007; H02M 3/156; H05B 41/2887

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Heraeus Noblelight GmbH
63450 Hanau (DE)**

(72) Inventor: **Falter, Wolfgang
63450 Hanau (DE)**

(74) Representative: **Mewburn Ellis LLP
Aurora Building
Counterslip
Bristol BS1 6BX (GB)**

(54) **DEVICE AND METHOD FOR INCREASING A VOLTAGE BY OPERATING A TRANSFORMER AT A HARMONIC OF AN ELECTRICAL FREQUENCY**

(57) The invention pertains to a device comprising
a. a power source;
b. a first circuit portion
i. comprising
A. an electric component adapted and arranged to be operated by alternating current;
B. a transformer comprising a first winding and a further winding, wherein the first winding is connected to the power source and the further winding is connected to the electric component, and

ii. wherein the first circuit portion is adapted and arranged for alternating current; wherein the device is adapted and arranged to operate the transformer at a frequency that is in the range of

$$(1 - x){\cdot}R_i \text{ to } (1 + y){\cdot}R_i,$$

where $R_i$ is the ith resonance of the first circuit portion, with $i$ a positive integer and $i > 1$, and x, $y$ are, independent from each other, in the range of 0.05 to 0.25, more preferably in the range of 0.10 to 0.19, and further preferably in the range of 0.12 to 0.17.

**Fig. 1**     **100**

EP 4 503 861 A1

**Description**

## FIELD OF THE INVENTION

The invention pertains to a device comprising a first circuit portion, wherein the first circuit portion is adapted and arranged for operation with alternating current, and wherein the first circuit portion is further adapted and arranged to be operated at a frequency above the first resonance of the first circuit portion.

## BACKGROUND

Known devices that comprise gas discharge lamps very often fail to produce high-intensity light. The intensity of the light can be increased by increasing the voltage over the gas discharge lamp. One option for increasing said voltage is to use multiple transformers. However, this generally leads to severe limitations on the size of the device, *i.e.,* the device cannot be manufactured to be small and compact. Furthermore, even with multiple transformers the desired voltage is often not obtained, while such devices with multiple transformers tend to have high failure rates.

## OBJECTS

An object of the present invention is to at least partially overcome at least one of the disadvantages encountered in the state of the art.

It is a further object of the invention to provide a device, preferably a device for producing light output, that has an improved reliability.

It is a further object of the invention to provide a device, preferably a device for producing light output, that can provide an increased voltage at a further winding of a transformer which forms part of the device.

It is a further object of the invention to provide a device, preferably a device for producing light output, that can provide an increased frequency at a further winding of a transformer which forms part of the device.

It is a further object of the invention to provide a device, preferably a device for producing light output, that has a reduced size.

It is a further object of the invention to provide a device, preferably a device for producing light output, that has an increased electrical safety.

It is a further object of the invention to provide a device that can provide an increased output, such as light intensity.

It is a further object of the invention to provide a method for operating a transformer, preferably a transformer that forms part of a device for producing light, that leads to an increased voltage at a further winding of the transformer.

It is a further object of the invention to provide a method for operating a transformer, preferably a transformer that forms part of a device for producing light, that leads to an increased frequency at a further winding of the transformer.

It is a further object of the invention to provide a method for operating a transformer, preferably a transformer that forms part of a device for producing light, that can be operated more safely.

## PREFERRED EMBODIMENTS OF THE INVENTION

A contribution to at least partially fulfilling at least one of the above-mentioned objects is made by any of the embodiments of the invention.

A 1$^{st}$ embodiment of the invention is a device comprising

    a. a power source;
    b. a first circuit portion

        i. comprising

            A. an electric component adapted and arranged to be operated by alternating current;
            B. a transformer comprising a first winding and a further winding, wherein the first winding is connected to the power source and the further winding is connected to the electric component, and

        ii. wherein the first circuit portion is adapted and arranged for alternating current;

    wherein
    the device is adapted and arranged to operate the transformer at a frequency that is in the range of

$$(1 - x) \cdot R_i \text{ to } (1 + y) \cdot R_i,$$

where

$R_i$ is the $i$th resonance of the first circuit portion, with $i$ a positive integer and $i > 1$, and
$x, y$ are, independent from each other, in the range of 0.05 to 0.25, more preferably in the range of 0.10 to 0.19, and further preferably in the range of 0.12 to 0.17.

In the 1st embodiment, the *"frequency"* should preferably be understood as a frequency of the alternating current in the first circuit portion when the device is operated. In the 1st embodiment, $R_2$ is the second resonance, $R_3$ is the third resonance, $R_4$ is the fourth resonance, *etc.* The resonances $R_i$, with i > 1 is also known as harmonics. In an aspect of the 1st embodiment, it is preferred that $x$ and $y$ differ by less than 20 %, more preferably by less than 10 %, even more preferably by less than 5 %, and further preferably by less than 1 % from each other. In this aspect, it is even further preferred that $x = y$.

In a preferred embodiment of the device, $i = 2$. This preferred embodiment is a 2nd embodiment of the invention, that preferably depends on the 1st embodiment of the invention.

In a preferred embodiment of the device, the device is adapted and arranged such that when the first circuit portion is operated at a frequency that is less than or equal to $0.85R_2$, more preferably less than or equal to $0.70R_1$, an output of the electrical component is reduced by more than 10 %, preferably by more than 15 %, more preferably by more than 20 %, even more preferably by more than 25 %, further preferably by more than 03 %, and even further preferably by more than 35 %. Here $R_1$ is the first resonance of the first circuit portion. This preferred embodiment is a 3rd embodiment of the invention, that preferably depends on any of the 1st to 2nd embodiments of the invention.

In an aspect of the 3rd embodiment, the decrease in the output is preferably with respect to the output when the first circuit portion is operated at a frequency that is in the range of $0.95R_2$ to $1.05R_2$. In an aspect of the 3rd embodiment, it is preferred that the output is an irradiance of electromagnetic radiation emitted by the electrical component. In an aspect of the 3rd embodiment, it is preferred that the device is adapted and arranged such that the first circuit portion can only be operated at a frequency that is larger than $1.2R_1$, more preferably larger than $1.5R_1$, even more preferably larger than $2R_1$, further preferably larger than 3Ri and even further preferably larger than $5R_1$.

In a preferred embodiment of the device, the electric component is a radiation means adapted and arranged to emit electromagnetic radiation. This preferred embodiment is a 4th embodiment of the invention, that preferably depends on any of the 1st to 3rd embodiments of the invention.

In a preferred embodiment of the device, the radiation means is adapted and arranged to emit electromagnetic radiation with an optical output power that is in the range of $0.1 \times 10^{-6}$ W to $100 \times 10^{-6}$ W, more preferably in the range of $1 \times 10^{-6}$ W to $50 \times 10^{-6}$ W, and further preferably in the range of $5 \times 10^{-6}$ W to $35 \times 10^{-6}$ W. This preferred embodiment is a 5th embodiment of the invention, that preferably depends on the 4th embodiment of the invention.

In a preferred embodiment of the device, the radiation means is a gas discharge lamp, preferably a gas discharge lamp selected from the group consisting of a metal vapour lamp, a xenon arc lamp, a deuterium arc lamp, or a combination of at least two thereof. This preferred embodiment is a 6th embodiment of the invention, that preferably depends on any of the 4th to 5th embodiments of the invention.

In an aspect of the 6th embodiment, a deuterium arc lamp is particularly preferred. Examples of a metal vapour lamp include a mercury-vapour lamp, a metal halide lamp, a ceramic discharge metal halide lamp, a sodium vapour lamp, and a combination of two or more thereof. A mercury vapour lamp is a preferred metal vapour lamp.

In a preferred embodiment of the device, the radiation means is adapted and arranged to emit at least 50 % of the total energy, more preferably at least 60 % of the total energy, and further preferably at least 70 % of the total energy of the electromagnetic radiation, emitted by the radiation means, in the range of 50 nm to 500 nm, more preferably in the range of 100 nm to 460 nm, and further preferably in the range of 160 nm to 420 nm. This preferred embodiment is a 7th embodiment of the invention, that preferably depends on any of the 4th to 6th embodiments of the invention.

In an aspect of the 7th embodiment, it is preferred that the radiation means is adapted and arranged to emit at least 50 % of the total energy, more preferably at least 60 % of the total energy, and further preferably at least 70 % of the total electromagnetic energy of the electromagnetic radiation, emitted by the radiation means, in the range of 50 nm to 500 nm. In this aspect, it is more preferred that the radiation means is adapted and arranged to emit at least 50 % of the total energy, more preferably at least 60 % of the total electromagnetic energy, and further preferably at least 70 % of the total electromagnetic energy of the electromagnetic radiation, emitted by the radiation means, in the range of 100 nm to 460 nm. In this aspect, it is further preferred that the radiation means is adapted and arranged to emit at least 50 % of the total energy, more preferably at least 60 % of the total electromagnetic energy, and further preferably at least 70 % of the total electromagnetic energy of the electromagnetic radiation, emitted by the radiation means, in the range of 160 nm to 420 nm.

In a preferred embodiment of the device, the range $(1 - x) \cdot R_i$ to $(1 + y) \cdot R_i$ is from 100 kHz to 600 kHz, more preferably from 140 kHz to 540 kHz, even more preferably from 180 kHz to 500 kHz, further preferably from 220 kHz to 460 kHz, even further preferably from 250 kHz to 430 kHz, and particularly preferably from 270 kHz to 405 kHz. This preferred embodiment is an 8th embodiment of the invention, that preferably depends on any of the 1st to 7th embodiments of the invention.

In a preferred embodiment of the device, the transformer has at least one or all of the following properties:

a. a resonance $R_i$, with $i > 1$, in the range of 160 kHz to 500 kHz, more preferably in the range of 210 kHz to 410 kHz, and further preferably in the range of 260 kHz to 365 kHz;
b. is an air-gap transformer, *e.g.*, the magnetic core of the transformer comprises an air gap.

This preferred embodiment is a 9th embodiment of the invention, that preferably depends on any of the 1st to 8th embodiments of the invention.

In an aspect of the 9th embodiment, all possible combination of the features a. and b. are preferred aspects of the embodiment. These combinations are *e.g.*, a; b; a+b. In an aspect of the 9th embodiment, feature b., it is preferred that the air gap is in the range of 0.01 mm to 1 mm, more preferably in the range of 0.05 mm to 0.6 mm, and further preferably in the range of 0.15 mm to 0.25 mm.

In a preferred embodiment of the device, the transformer is adapted and arranged to increase a peak-to-peak voltage, wherein the increase is more preferably in the range of 50 to 675, even more preferably in the range of 100 to 625, and further preferably in the range of 125 to 600. This preferred embodiment is a 10th embodiment of the invention, that preferably depends on any of the 1st to 9th embodiments of the invention.

In the 10th embodiment, the *"increase"* is calculated by dividing the peak-to-peak voltage over the further winding by the peak-to-peak voltage over the first winding.

In a preferred embodiment of the device, the transformer is adapted and arranged to produce a peak-to-peak voltage that is in the range of 1500 V to 5300 V, more preferably in the range of 1900 V to 4800 V, and further preferably in the range of 2400 V to 4200 V, preferably from an input peak-to-peak voltage that is in the range of 0.5 V to 25 V. This preferred embodiment is an 11th embodiment of the invention, that preferably depends on any of the 1st to 10th embodiments of the invention.

In an aspect of the 11th embodiment, it is preferred that the peak-to-peak voltage that is produced is measured over the further winding of the transformer. In an aspect of the 11th embodiment, it is preferred that the input peak-to-peak voltage is measured over the first winding of the transformer. In an aspect of the 11th embodiment, it is preferred that the transformer is adapted and arranged to produce a peak-to-peak voltage that is in the range of 1500 V to 5300 V, more preferably in the range of 1900 V to 4800 V, and further preferably in the range of 2400 V to 4200 V, preferably from an input peak-to-peak voltage that is in the range of 2 V to 16 V. In this aspect it is more preferred that the transformer is adapted and arranged to produce a peak-to-peak voltage that is in the range of 1500 V to 5300 V, more preferably in the range of 2200 V to 4800 V, and further preferably in the range of 2800 V to 4200 V, preferably from an input peak-to-peak voltage that is in the range of 4 V to 12 V.

In a preferred embodiment of the device, the electric component is adapted and arranged to operate with a peak-to-peak voltage that is in the range of 1200 V to 4500 V, more preferably in the range of 1800 V to 3900 V, and further preferably in the range of 2200 V to 3500 V. This preferred embodiment is a 12th embodiment of the invention, that preferably depends on any of the 1st to 11th embodiments of the invention.

In a preferred embodiment of the device, the device further comprises at least one or all of the following:

a. a DC-to-DC power converter, preferably a buck converter, connected to the power source;
b. a power inverter connected to the power source.

This preferred embodiment is a 13th embodiment of the invention, that preferably depends on any of the 1st to 12th embodiments of the invention.

In the 13th embodiment, feature a., a *"DC-to-DC converter"* is preferably an electronic circuit and/or electromechanical device that converts a DC source from one voltage level to another. A preferred DC-to-DC converter reduces the voltage level. In the 13th embodiment, feature b., *"power inverter"* is preferably an electronic circuit and/or electromechanical device that converts DC to AC. In an aspect of the 13th embodiment, all possible combination of the features a. and b. are preferred aspects of the embodiment. These combinations are *e.g.*, a; b; a+b.

In a preferred embodiment of the device, the first circuit portion has a surface area that is in the range of 500 mm$^2$ to 12000 mm$^2$, more preferably in the range of 2000 mm$^2$ to 9000 mm$^2$, and further preferably in the range of 4000 mm$^2$ to 7000 mm$^2$. This preferred embodiment is a 14th embodiment of the invention, that preferably depends on any of the 1st to 13th embodiments of the invention.

A 15th embodiment of the invention is a sensing system comprising

a. the device according to any of the preceding claims,

b. and preferably a sensor adapted and arranged to sense electromagnetic radiation, preferably electromagnetic radiation emitted by the electric component of the device.

An example of a sensing system, according to the invention, is the following: a sensing system comprising a sensor and device, according to the invention, wherein the device comprises a gas discharge lamp, such as a deuterium arc lamp. The gas discharge lamp is used to illuminate a sample, *e.g.,* a blood sample, or a water sample. The light transmitted through the sample is sensed with the sensor.

A 16th embodiment of the invention is a method for producing output, comprising the steps of

a. providing a device according to the invention, preferably a device according to any of the 1st to 15th embodiments of the invention;

b. operating the transformer by using the power source to provide a first peak-to-peak voltage over the first winding of the transformer, thereby obtaining a further peak-to-peak voltage over the further winding;

c. using the further voltage to operate the electric component, thereby obtaining output from the electric component;

wherein

the transformer is operated at a frequency that is in the range of

$$(1 - x) \cdot R_i \text{ to } (1 + y) \cdot R_i,$$

where

$R_i$ is the $i$th resonance of the first circuit portion, with $i$ a positive integer and $i > 1$, and

$x, y$ are, independent from each other, in the range of 0.05 to 0.25, more preferably in the range of 0.10 to 0.19, and further preferably in the range of 0.12 to 0.17.

In an aspect of the 16th embodiment, it is preferred that steps b. and c. are performed at least partially simultaneously. In an aspect of the 16th embodiment, it is preferred that $x$ and $y$ differ by less than 20 %, more preferably by less than 10 %, even more preferably by less than 5 %, and further preferably by less than 1 % from each other. In this aspect, it is even further preferred that $x = y$.

In a preferred embodiment of the method, $i = 2$. This preferred embodiment is a 17th embodiment of the invention, that preferably depends on the 16th embodiment of the invention.

In a preferred embodiment of the method, the method further comprises the step of converting DC to AC. This preferred embodiment is an 18th embodiment of the invention, that preferably depends on any of the 16th to 17th embodiments of the invention.

In an aspect of the 18th embodiment, it is preferred that the power source provides DC.

In a preferred embodiment of the method, the further peak-to-peak voltage is in the range of 50 to 675 times larger, more preferably in the range of 100 to 625 times larger, and further preferably in the range of 125 to 600 times larger than the first peak-to-peak voltage. This preferred embodiment is a 19th embodiment of the invention, that preferably depends on any of the 16th to 18th embodiments of the invention.

In the 19th embodiment, to determine how many times the further peak-to-peak voltage is larger than the first peak-to-peak voltage, the further peak-to-peak voltage is divided by the first peak-to-peak voltage.

In a preferred embodiment of the method, the further peak-to-peak voltage is in the range of 1500 V to 5300 V, more preferably in the range of 1900 V to 4800 V, and further preferably in the range of 2400 V to 4200 V, and the first peak-to-peak voltage is preferably in the range of 0.5 V to 25 V. This preferred embodiment is a 20th embodiment of the invention, that preferably depends on any of the 16th to 19th embodiments of the invention.

In an aspect of the 20th embodiment, it is preferred that the further peak-to-peak voltage is in the range of 1500 V to 5300 V, more preferably in the range of 1900 V to 4800 V, and further preferably in the range of 2400 V to 4200 V, and it is preferred that the first peak-to-peak voltage is in the range of 2 V to 16 V. In this aspect it is more preferred that the further peak-to-peak voltage is in the range of 1500 V to 5300 V, more preferably in the range of 2200 V to 4800 V, and further preferably in the range of 2800 V to 4200 V, and it is preferred that the first peak-to-peak voltage is in the range of 4 V to 12 V.

In a preferred embodiment of the method, the electric component is operated with a peak-to-peak voltage that is in the range of 1200 V to 4500 V, more preferably in the range of 1800 V to 3900 V, and further preferably in the range of 2200 V to 3500 V. This preferred embodiment is a 21st embodiment of the invention, that preferably depends on any of the 16th to 20th embodiments of the invention.

In a preferred embodiment of the method, the output is at least one or all of the following:

a. electromagnetic radiation, preferably electromagnetic radiation that is in the in the range of 50 nm to 500 nm, more preferably in the range of 100 nm to 460 nm, and further preferably in the range of 160 nm to 420 nm;
b. a sound;
c. a movement, *e.g.*, a vibration;
d. thermal energy, *e.g.,* heat.

This preferred embodiment is a 22nd embodiment of the invention, that preferably depends on any of the 16th to 21st embodiments of the invention.

In an aspect of the 22nd embodiment, all possible combination of the features a. to d. are preferred aspects of the embodiment. These combinations are *e.g.,* a; b; c; d; a+b; a+c; a+d; b+c; b+d; c+d; a+b+c; a+b+d; a+c+d; b+c+d; a+b+c+d.

A 23rd embodiment of the invention is output obtainable from a method according to the invention, preferably the method according to any of the 16th to 22nd embodiments of the invention.

A 24th embodiment of the invention is a use of a frequency $F$ that is higher than a first resonance $R_1$ of a circuit portion, adapted and arranged for alternating current, to operate an electrical component.

In an aspect of the 24th embodiment, it is preferred that the frequency $F$ is at least 1.2 times, more preferably at least 1.5 times, even more preferably at least 2 times, further preferably at least 3 times, and even further preferably at least 5 times higher than the first resonance $R_1$.

A 25th embodiment of the invention is a method for operating an electrical component, comprising the steps of

a. providing a first circuit portion comprising the electrical component, and wherein the first circuit portion is adapted and arranged for alternating current;
b. operating the electrical component using a frequency $F$ that is higher than a first resonance $R_1$ of a circuit portion.

In an aspect of the 25th embodiment, it is preferred that the frequency $F$ is at least 1.2 times, more preferably at least 1.5 times, even more preferably at least 2 times, further preferably at least 3 times, and even further preferably at least 5 times higher than the first resonance $R_1$.

## DETAILED DESCRIPTION OF THE INVENTION

Throughout this document, disclosures of ranges should preferably be understood to include both end points of the range. Furthermore, each disclosure of a range in the document should preferably be understood as also disclosing preferred sub-ranges in which one end point is excluded or both end points are excluded. For example, a disclosure of a range from 200 kHz to 300 kHz is to be understood as disclosing a range that includes both of the end points 200 kHz and 300 kHz. Furthermore, it is to be understood as also disclosing a range that includes the end point 200 kHz but excludes the end point 300 kHz, a range that excludes the end point 200 kHz but includes the end point 300 kHz, and a range that excludes both end points 200 kHz and 300 kHz.

Some preferred embodiments and preferred aspects may comprise different combinations of features. If the various combinations are listed, the combinations are separated by a semi-colon (";"). For example, the list "a; a+b; a+c+d" should be understood to disclose an embodiment that comprises the feature "a", an embodiment that comprises the features "a" and "b", and an embodiment that comprises the features "a", "c", and "d".

In this document, the following abbreviations are used: AC - alternating current; DC - direct current.

Frequency

"Frequency" should preferably be understood as the rate at which the alternating current changes direction, preferably in a first circuit portion. A "first circuit portion" should preferably be understood as a section of a device's circuitry that is operated using alternating current.

Power source

Power sources adapted and arranged to produce a current, and which are suitable for the present invention, are well-known to the skilled person. Such power sources are also commercially available. Preferred examples of a power source include a DC power source, such as a battery, and an AC power source, such as a wall outlet. A suitable power source is commercially available from, *e.g.*, reichelt elektronik GmbH & Co. KG (Germany).

Transformer

Transformers suitable for the present invention are well-known to the skilled person. Such transformers are also commercially available from Pikatron GmbH (Germany).

### Electrical component

A preferred electrical component is a gas discharge lamp. Gas discharge lamps are also known as arc lamps and arc discharge lamps. Such lamps are well-known to the skilled person, and are commercially available from Heraeus Noblelight GmbH.

### Peak-to-peak voltage

Peak-to-peak voltage should preferably be understood as the distance from the lowest negative amplitude to the highest positive amplitude of an AC voltage waveform.

The invention is now illustrated by non-limiting examples and exemplifying embodiments.

## FIGURES

### List of figures

The figures serve to exemplify the present invention, and should not be viewed as limiting the invention. Furthermore, the figures are not drawn to scale.

Fig. 1: schematic illustration of a device according to the invention.
Fig. 2: method, according to the invention, for producing output.
Fig. 3A: peak-to-peak voltage as a function of frequency for a first embodiment of the device according to the invention.
Fig. 3B: peak-to-peak voltage as a function of frequency for a second embodiment of the device according to the invention.

### Description of figures

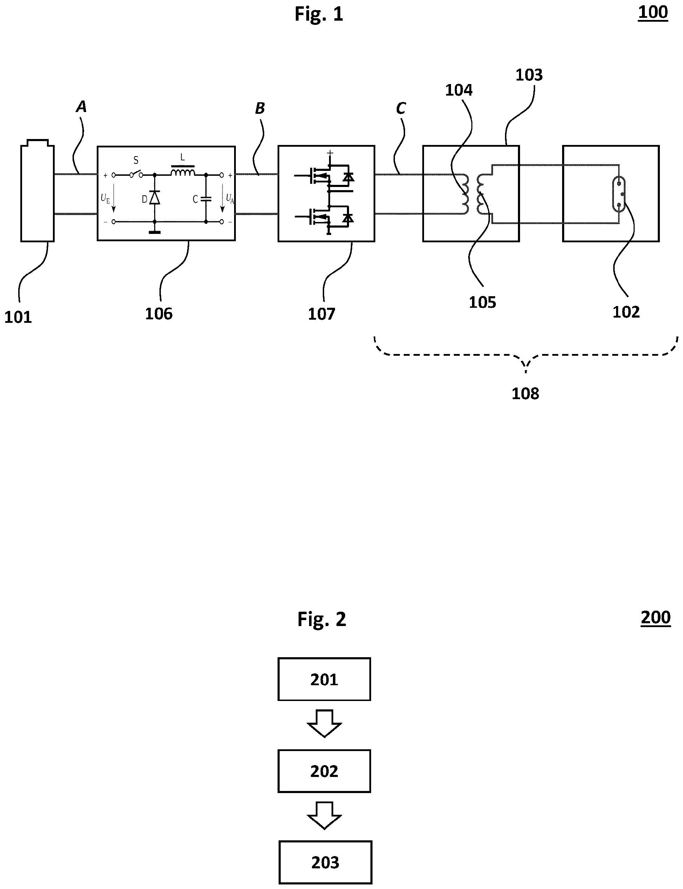

Fig. 1 shows a schematic illustration of a device 100 according to the invention. The device 100 has a power source 101, such a battery, that is adapted and arranged to produce DC with a peak-to-peak voltage of 12 V (measured at position $A$). The battery 101 is connected to a buck converter 106 that is adapted and arranged to reduce the voltage to 10 V (measured at position $B$). The buck converter is connected to a half bridge 107 that is adapted and arranged to transform the DC to AC (AC is present at position $C$). The half bridge 107 is connected to a first winding 104 of a transformer 103 that is adapted and arranged to increase the voltage in the further winding 105 of the transformer 103 to a peak-to-peak voltage of 4000 V. The transformer is thus adapted and arranged to increase the voltage to a value that is 330 times larger than the input voltage. The further winding 105 is connected to a deuterium arc lamp 102 (an electric component) that is adapted and arranged to emit at least 70 % of the total electromagnetic radiation emitted by the deuterium arc lamp 102 in the range of 190 nm to 390 nm. The deuterium arc lamp 102 is adapted and arranged to operate with a peak-to-peak voltage of 3200 V. The device 100 has a first circuit portion 108 that comprises the deuterium arc lamp 102 and the transformer 103. Furthermore, the device 100 is adapted and arranged to operate the transformer 103 at a frequency that is in the range of

$$(1 - x) \cdot R_i \text{ to } (1 + y) \cdot R_i,$$

where $R_i$ is the $i$th resonance of the first circuit portion 108, with $i$ a positive integer and $i > 1$, $x = 0.15$, $y = 0.15$, and $i = 2$. The device 100 is thus adapted and arranged to operate the transformer 103 at a frequency that is in the range of $0.85R_2$ to $1.15R_2$, where $R_2$ is the second resonance of the first circuit portion 108. Furthermore, the device 100 is adapted and arranged to operate the transformer at frequencies that are below, and above the range $0.85R_2$ to $1.15R_2$. However, it is preferred for the device to be inoperable at frequencies that are below $0.35R_2$.

Fig. 2 is a flow diagram of the method 200, according to the invention, for producing output. In step 201, a device as described in Fig. 1 is provided. In step 202, the transformer is operated by using the power source to provide a first peak-to-peak voltage over the first winding of the transformer, thereby obtaining a further peak-to-peak voltage over the further winding. The transformer is operated at a frequency that is in the range of $0.85R_2$ to $1.15R_2$. Furthermore, the power source provides a voltage and DC that is reduced by the buck converter, while the half bridge changes the DC to AC. In step 203, the further voltage is used to operate the deuterium arc lamp, thereby obtaining output in the form of electromagnetic radiation that is in the range of 100 nm to 400 nm.

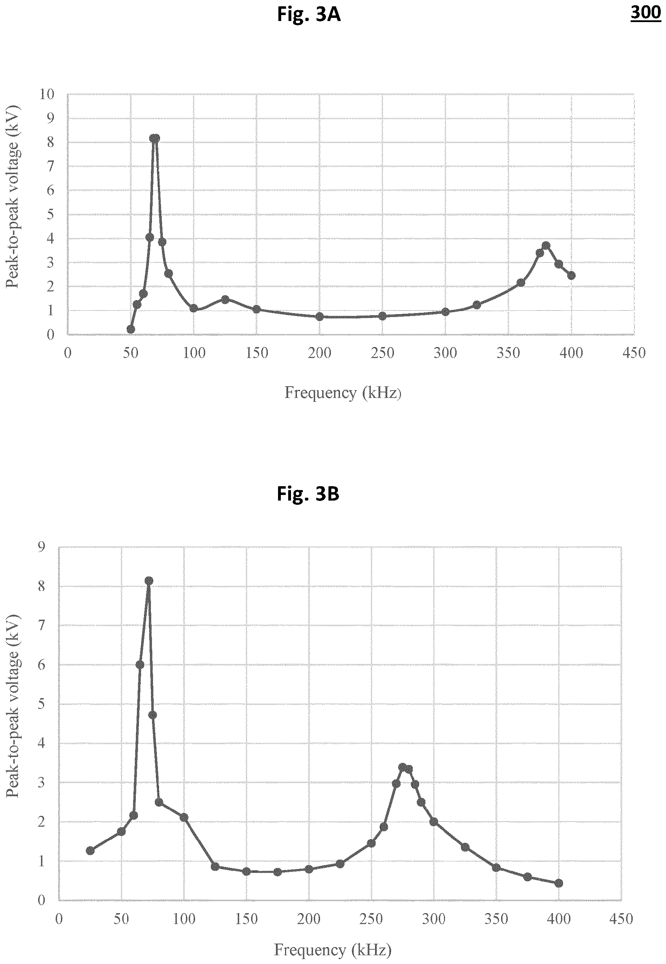

Fig 3A shows peak-to-peak voltage measurements as a function of frequency for a first embodiment of the device according to the invention (see example 1). As can be seen in Fig. 3A, peak-to-peak voltage spikes are present at 70 kHz and 375 kHz, indicating a first resonance $R_1$ and a second resonance $R_2$, respectively. Similarly, Fig 3B shows peak-to-peak voltage measurements as a function of frequency for a second embodiment of the device according to the invention (see example 3) It can be seen in Fig. 3B that peak-to-peak voltage spikes are present at 72 kHz and 275 kHz, indicating a first resonance $R_1$ and a second resonance $R_2$, respectively. For both Figs 3A and 3B, the measurements are for the first circuit portion, and were obtained as described in the "Test Methods" section.

## TEST METHODS

The test methods which follow were utilized within the context of the invention. Unless stated otherwise, the measurements were conducted at an ambient temperature of 23 °C, an ambient air pressure of 100 kPa (0.986 atm) and a relative air humidity of 50 %.

### Frequency and peak-to-peak voltage

Frequency and peak-to-peak voltage are measured using an oscilloscope.

### Resonance of the device

The resonance of the first circuit portion is determined as follows: an oscilloscope is connected at the deuterium arc lamp (102) of the device (100) (see Fig. 1). The oscilloscope used is a model HDO 6104 A, commercially available from Teledyne Lecroy. The frequency of the alternating current, measured at using a high voltage probe with a low capacity, is gradually increased from 0 Hz in incremental steps of 1 kHz. With each increase, the oscilloscope is used to measure the peak-to-peak voltage over the deuterium arc lamp (102). Frequencies where a rapid rise (referred to as a "spike" in the present document) in the peak-to-peak voltage measurement is observed indicate a resonance $R_i$ of the first circuit portion. The lowest frequency where a peak-to-peak voltage spike is observed indicates the first resonance $R_1$, the next frequency where a peak-to-peak voltage spike is observed indicates the second resonance $R_2$, *etc.* (see Figs 3A and 3B which were obtained according to the above method).

In order to be identified as a resonance, it is also required that a spike has a gradient $\Delta$ of at least 0.04 kV/kHz. This is in order to take measurement errors of the oscilloscope into account. The gradient is determined as follows:

$$\Delta = (V_{spike} - V_2) / (F_{spike} - F_2),$$

where $F_{spike}$ is the frequency of an observed spike, $V_{spike}$ is the peak-to-peak voltage measured at $F_{spike}$, $F_2$ is a frequency that is 20 kHz lower than $F_{spike}$, and $V_2$ is the peak-to-peak voltage measured at $F_2$. Turning to Fig. 3A, it can be seen that a spike is present at 125 kHz. However, calculating the gradient $\Delta$ for this spike leads to a value of $\Delta = 0.014$ ($V_{spike} = 1.45$ kV, $V_2 = 1.16$, $F_{spike} = 125$ kHz, $F_2 = 105$ kHz). This can be compared to the spike at 70 kHz, which has $\Delta = 0.397$ ($V_{spike} = 8.16$ kV, $V_2 = 0.22$, $F_{spike} = 70$ kHz, $F_2 = 50$ kHz), and the spike at 375 kHz, which has $\Delta = 0.082$ ($V_{spike} = 3.39$ kV, $V_2 = 1.75$, $F_{spike} = 375$ kHz, $F_2 = 355$ kHz). The spike present at 125 kHz in Fig. 3A is thus not identified as a resonance.

### Irradiance

The irradiance is measured using a model USB 4000 spectrometer commercially available from Ocean Optics, Inc (USA).

## EXAMPLES

The invention is illustrated further by way of examples. The invention is not restricted to the examples.

### Example 1

A device, as described in Fig. 1 is provided. The device is used to operate the transformer at a frequency that is in the range of $0.9R_1$ and $1.1R_1$. In other words, the transformer is operated at a frequency that is around the first resonance $R_1$ of the first circuit portion. The device is used to generate light using the deuterium arc lamp.

Example 2

Example 1 is repeated, except that the device is used to operate the transformer at a frequency that is in the range of $0.9R_2$ and $1.1R_2$. In other words, the transformer is operated at a frequency that is around the second resonance $R_2$ of the first circuit portion.

Examples 1 and 2 correspond to the device of Fig. 3A.

Example 3

A modified device, as described in Fig. 1 is provided. Compared to Example 1, the device has been modified by optimising the inductivity of the device according to the deuterium arc lamp that is used. The modified device is used to operate the transformer at a frequency that is in the range of $0.9R_1$ and $1.1R_1$. In other words, the transformer is operated at a frequency that is around the first resonance $R_1$ of the first circuit portion. The modified device is used to generate light using the deuterium arc lamp.

Table 1

|  | **Example 1** | **Example 2** | **Example 3** | **Example 4** |
|---|---|---|---|---|
| Resonance | $R_1$ | $R_2$ | $R_1$ | $R_2$ |
| Frequency of resonance [kHz] | 74 | 280 | 74 | 280 |
| Peak wavelength of UV light from deuterium arc lamp [nm] | 215 | 215 | 260 | 260 |
| Optical output power at peak wavelength [W] | $6.11 \times 10^{-10}$ | $7.71 \times 10^{-10}$ | $1.55 \times 10^{-11}$ | $2.80 \times 10^{-11}$ |

From Table 1 it can be seen that operating the device at the second resonance provides an increase in the optical output power of between 1.26 and 1.81.

**REFERENCE LIST**

100    Device
101    Power source
102    Arc lamp
103    Transformer
104    First winding
105    Further winding
106    Buck converter
107    Half bridge
108    First circuit portion

**Claims**

**1.** A device comprising

    a. a power source;
    b. a first circuit portion

        i. comprising

            A. an electric component adapted and arranged to be operated by alternating current;
            B. a transformer comprising a first winding and a further winding, wherein the first winding is connected to the power source and the further winding is connected to the electric component, and

        ii. wherein the first circuit portion is adapted and arranged for alternating current;

wherein
the device is adapted and arranged to operate the transformer at a frequency that is in the range of

$$(1-x)\cdot R_i \text{ to } (1+y)\cdot R_i,$$

where

> $R_i$ is the $i$th resonance of the first circuit portion, with $i$ a positive integer and $i > 1$, and
> $x, y$ are, independent from each other, in the range of 0.05 to 0.25.

2. The device according to claim 1, wherein $i = 2$.

3. The device according to any of the preceding claims, wherein the device is adapted and arranged such that when the first circuit portion is operated at a frequency that is less than or equal to $0.85R_2$, an output of the electrical component is reduced by more than 10 %.

4. The device according to any of the preceding claims, wherein the electric component is a radiation means adapted and arranged to emit electromagnetic radiation.

5. The device according to claim 4, wherein the radiation means is adapted and arranged to emit at least 50 % of the total energy of the electromagnetic radiation, emitted by the radiation means, in the range of 50 nm to 500 nm.

6. The device according to any of the claims 4 or 5, wherein the radiation means is a gas discharge lamp.

7. The device according to any of the preceding claims, wherein the range $(1 - x) \cdot R_i$ to $(1 + y) \cdot R_i$, is from 100 kHz to 600 kHz.

8. The device according to any of the preceding claims, wherein the transformer is adapted and arranged to increase a peak-to-peak voltage, and wherein the increase is in the range of 50 to 675.

9. The device according to any of the preceding claims, wherein the first circuit portion has a surface area that is in the range of 500 mm$^2$ to 12000 mm$^2$.

10. A sensing system comprising the device according to any of the preceding claims.

11. A method for producing output, comprising the steps of

> a. providing a device according to any of the claims 1 to 9;
> b. operating the transformer by using the power source to provide a first peak-to-peak voltage over the first winding of the transformer, thereby obtaining a further peak-to-peak voltage over the further winding;
> c. using the further voltage to operate the electric component, thereby obtaining output from the electric component;

wherein
the transformer is operated at a frequency that is in the range of

$$(1-x)\cdot R_i \text{ to } (1+y)\cdot R_i,$$

where

> $R_i$ is the $i$th resonance of the first circuit portion, with $i$ a positive integer and $i > 1$, and
> $x, y$ are, independent from each other, in the range of 0.05 to 0.25.

12. The method according to claim 11, wherein $i = 2$.

13. The method according to any of the claims 11 to 12, wherein the output is at least one or all of the following:

a. electromagnetic radiation;
b. a sound;
c. a movement;
d. thermal energy.

**14.** Output obtainable from the method according to any of the claims 11 to 13.

**15.** Use of a frequency $F$ that is higher than a first resonance $R_1$ of a circuit portion, adapted and arranged for alternating current, to operate an electrical component.

**Fig. 1**        <u>100</u>

A    B    C    104   103

$U_E$   S   L   D   C   $U_A$

101    106    107    105    102

108

**Fig. 2**        <u>200</u>

201

202

203

**Fig. 3A** <u>300</u>

**Fig. 3B**

Europäisches
Patentamt

European
Patent Office

Office européen
des brevets

# EUROPEAN SEARCH REPORT

Application Number

EP 23 18 9802

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/072762 A1 (FENG SHA [CN]) 19 March 2009 (2009-03-19) * the whole document * ----- | 1-15 | INV. H05B41/24 H05B41/288 H02M7/48 |

TECHNICAL FIELDS
SEARCHED        (IPC)

H05B
H02M

The present search report has been drawn up for all claims

| Place of search | Date of completion of the search | Examiner |
|---|---|---|
| Munich | 18 January 2024 | Waters, Duncan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

**EP 23 18 9802**

This annex lists the patent family members relating to the patent documents cited in  the above-mentioned European search report.
The members are as contained in the European Patent Office EDP file on
The European Patent Office is in no way liable for these particulars which are merely given for the purpose of information.

**18-01-2024**

| Patent document cited in search report | Publication date | Patent family member(s) | Publication date |
|---|---|---|---|
| US 2009072762 A1 | 19-03-2009 | CN 101388175 A | 18-03-2009 |
|  |  | US 2009072762 A1 | 19-03-2009 |
|  |  | US 2011273105 A1 | 10-11-2011 |